# EUROPEAN PATENT APPLICATION

(11) **EP 1 923 168 A1**
(43) Date of publication of application: **21.05.2008**
(21) Application number: 07120178.4
(22) Date of filing: 07.11.2007
(51) Int. Cl.: B23Q 1/54, B23Q 1/62

(54) **Spindle assembly with parallel kinematics**

(30) Priority: 15.11.2006 IT PD20060424
(71) Applicant: IMR S.p.A., 34076 Romans d'Isonzo (Gorizia) (IT)
(72) Inventor: Giolo, Fabio, 33050 Bagnaria Arsa UD (IT)
(74) Representative: Modiano, Micaela Nadia

(57) **Abstract**

A spindle assembly for chip-forming machine tools, such as transfer machining systems or machining centers, comprising a module (19) with a movable platform with parallel kinematics (a module such as a Stewart platform) on which a spindle (20) is arranged. Means (29) for translational motion along two mutually perpendicular directions (x, y) are associated with the module of the Stewart platform type and allow a translational motion of the module of the Stewart platform type (19) with respect to the base frame (17) of the machine tool, thus increasing the volume on which the tool fixed to the spindle (20) can work.

## Description

The present invention relates to a spindle assembly for chip-forming machine tools such as transfer machining systems or machining centers.

As is known, machine tools for chip-forming machining are characterized by the relative movement between the cutting profile of the tool and the surface of the workpiece.

This movement can be broken down into a) working motion, characterized by the cutting speed, which engages an axis with a circular or rectilinear motion assigned to the workpiece or the tool; b) advancement motion, which normally engages from one up to five axes simultaneously and by means of which it is possible to trace any path in physical space and orient the cutting edge appropriately.

Advancement motions can be assigned to the workpiece holder, to the tool holder, or to both, especially when the advancement motion is produced by two or more interpolated axes.

Machining centers are machine tools in which the workpiece, once it has entered a single station, in practice undergoes all the machining processes on the part of one or more machining heads which carry one or more tool spindles.

Machining centers, provided with a suitable number of tools, are highly flexible machines in relation to the machining processes and to the types of workpiece.

Machining centers, installed in cells or more complex systems as a function of production volumes, are dedicated to the machining of families of workpieces; according to the production program, different workpieces are fed automatically, often in batches of one for each type, so as to provide in real time the machined components required for the subsequent assembly of a unit.

Machines with automatic workpiece transfer, more commonly known as transfer machining systems, are a type of automatic machine which combines, in a single production unit, the functions of a series of separate machines, unifying loading operations and transfer mechanisms.

A transfer machine is constituted by a series of machining stations which work simultaneously; the workpiece enters, suitably clamped in a vise, and is transferred sequentially in front of each of the machining units, so that once the steady state has been reached each step of the line or carousel corresponds to the loading of a blank and the unloading of a fully machined workpiece.

Transfer systems are machines with an extremely high productivity, in which the cutting time is the prevailing part of the cycle time. Production time is a fraction of the cycle time of the workpiece, in inverse proportion to the number of stations; this allows high production rates, which are useful for mass production, and these machines can be adapted easily to machine with high productivity all the parts of a parametric series (same machining processes but different dimensions).

In general, both in transfer machines and in machining centers, the kinematic systems of the spindles are currently constituted by series arrangements of transmission elements, which are usually connected to each other by side-fitting pairs (or joints with multiple degrees of freedom), provided by means of low-friction guides and sliders actuated by screw-type devices.

This serial arrangement of the kinematic elements leads to problems linked to the onset of reactions as the cutting speeds of the tool increase, problems linked to inertia reactions in view of the large moving masses (the dynamic performance decreases as the size of the machine increases) and also problems linked to positioning error propagation in passing from one element to the other of the serial kinematic chain; further, the elements of this kinematic chain are generally complicated and therefore expensive.

Complexity increases with control of the machining axes of the tool; this is particularly felt in transfer machines, in which the machining processes are generally simpler than in a machining center; for example, in these machines the provision of holes which are oblique with respect to a main advancement direction of a spindle leads to the need for actuators to turn the spindle, which increase significantly the complexity of the entire machine.

These problems might be overcome by means of a kinematic system of the parallel type.

Parallel kinematic system technology was born with the Stewart platform (also known in the literature as "Stuart"), which was devised in the 1960s to provide a flight simulator; subsequent development for other industrial uses has been hindered by the great complexity of the kinematic relationships, which made it difficult to study and almost impossible to provide an efficient control system.

A Stewart platform module consists of two platforms: one is movable and the other one is fixed to the frame; the platforms are connected by means of several variable-geometry legs (so as to provide a plurality of kinematic chains which work in parallel). The geometry variation of the legs leads to a variation of the position of the movable platform with respect to the fixed one; this geometry variation ensures up to six degrees of freedom in space.

In general, the legs can be associated with actuators for the translational motion of the legs (which in practice are telescopic) and can be rigidly coupled rotationally at their ends to the two platforms, or the end of one leg can be rigidly coupled rotationally to the movable (or fixed) platform, while the opposite end can be rigidly coupled rotationally to a slider which can slide on a guide which is integrated in the fixed platform.

The development of computers has now allowed to overcome the problems related to calculating the kinematic relationships, but industrial application has been limited in practice only to the use of Stewart platform modules to provide manipulators.

So far, use in the field of machine tools is limited by the fact that the movements of the spindle applied to the movable platform are of limited extent; in practice, the useful working volume is very limited with respect to the dimensions of the Stewart platform module.

The spindle, supported by the movable platform, can in fact perform a translational motion in a main direction for approaching the workpiece, can tilt in order to perform machining processes which are oblique with respect to the main direction, but cannot perform a translational motion transversely to such direction (except to a small extent), thus limiting in practice the working volume associated with the spindle.

Moreover, the working volume is not uniform in terms of precision and especially of force that can be applied by the tool to the workpiece.

The aim of the present invention is to solve the drawbacks linked to known types of machine tool for chip-forming machining, by providing a spindle assembly for chip-forming machine tools, such as transfer machining systems or machining centers, which allows to perform machining processes with complex orientations within a large working volume.

Within this aim, an object of the present invention is to provide a spindle assembly for chip-forming machine tools, such as transfer machining systems or machining centers, which does not have particular problems in terms of vibrations as the cutting speeds of the tool increase.

Another object of the present invention is to provide a spindle assembly for chip-forming machine tools, such as transfer machining systems or machining centers, which has an excellent dynamic performance with respect to currently known machines which have the same control complexity of the machining axes.

This aim and these and other objects, which will become better apparent hereinafter, are achieved by a spindle assembly for chip-forming machine tools, such as transfer machining systems or machining centers, which comprises:
- a framework to be associated with a machining station of a machine tool,
- a supporting platform for at least one spindle,
- at least three legs for connecting said platform to said framework,
- means for varying the configuration of said at least three legs, which are adapted to allow a translational motion and a relative inclination of said platform with respect to said framework,
characterized in that it comprises means for translational motion along two mutually perpendicular directions of said framework with respect to the reference position, which can be identified on the machining station of the machine tool with which the spindle assembly is to be associated.

Further characteristics and advantages of the invention will become better apparent from the following detailed description of some preferred but not exclusive embodiments thereof, illustrated by way of non-limiting example in the accompanying drawings, wherein:
Figure 1 is a partially sectional schematic side view of a machine tool of the transfer type, with a transfer table which rotates about a horizontal axis and with spindle modules according to the invention applied thereto;

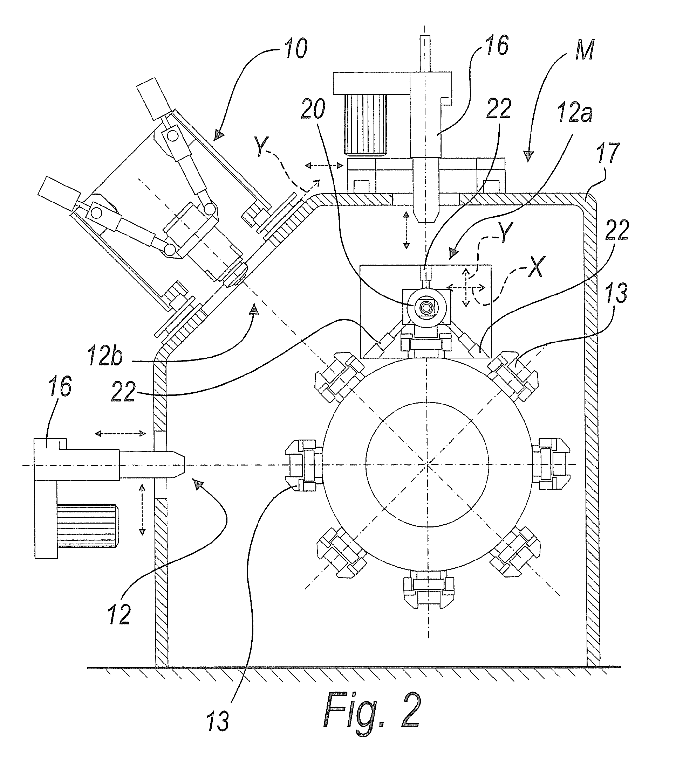

Figure 2 is a partially sectional schematic side view of the machine tool of Figure 1;
Figure 3 is a view of a detail of the machine of Figure 1, which illustrates the spindle module, translated with respect to the base frame of the machine tool;
Figure 4 is a view of the detail of Figure 3, with the spindle translated with respect to the relative position in the framework of Figure 3;
Figure 5 is a view of the detail of Figure 3, with the spindle rotated and translated with respect to the relative position in the framework shown in Figure 3;
Figure 6 is a view of a second embodiment of the detail of Figure 3;
Figure 7 is a view of a third embodiment of the detail of Figure 3.

It is noted that anything found to be already known during the patenting process is understood not to be claimed and to be the subject of a disclaimer.

With reference to the figures, a spindle assembly according to the invention is generally designated by the reference numeral 10.

The spindle assembly 10 is mounted on a machine tool M, for example of the transfer type with a table 11 for transferring the workpieces to be machined between machining stations 12 which has a horizontal rotation axis (equivalently, the same inventive concept can be applied to tables which rotate with a vertical axis); on the peripheral region of the table 11 there are workpiece retention vises 13.

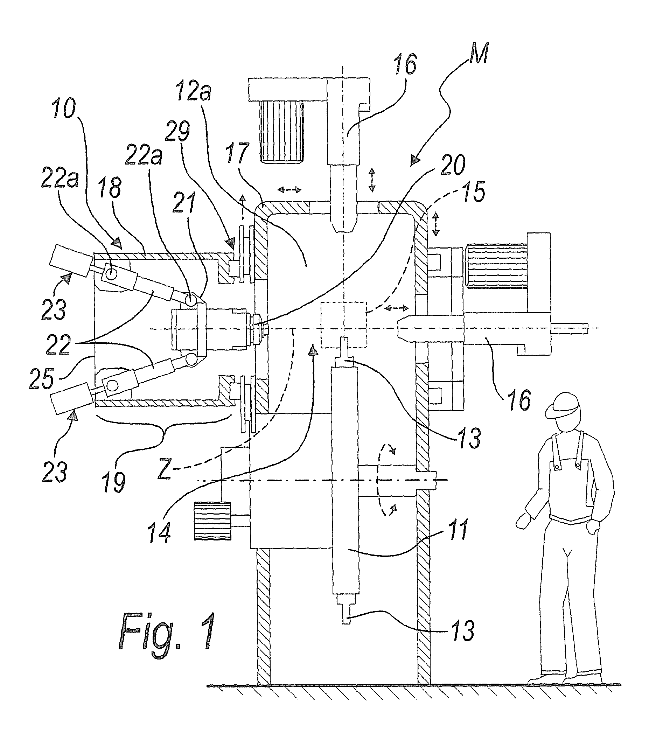

The table 11 turns, placing sequentially the workpiece retention vises 13 in front of all the machining stations 12, thus identifying in front of them regions, generally designated by the reference numeral 14, for positioning the workpiece to be machined; in Figure 1, a workpiece to be machined is shown schematically in broken lines and is designated by the reference numeral 15.

One or more machining heads 16 are provided on each machining station 12, each comprising a spindle provided with a tool (not shown schematically in the figures).

The machining heads 16 have a per se known structure and can perform for example simple translational motions toward the workpiece to be machined and translational motions along two other directions which are perpendicular to each other and to the direction of translational motion toward the workpiece, so as to provide simple machining processes.

A spindle assembly 10 is provided on a machining station 12a which is associated with the base frame 17 of the station; the spindle assembly 10 is provided with a framework 18, which constitutes the support for a Stewart module 19, with which a spindle 20 is associated (an equivalent module is provided also on an additional machining station 12b).

In practice, the Stewart module 19 is constituted by the framework 18, by a platform 21 for supporting the spindle 20, and by three legs 22, which are interposed between the framework 18 and the platform 21 (in equivalent embodiments there can be more than three legs, according to examples of per se known structures); the three legs 22, in this embodiment, are arranged symmetrically with respect to the axis of the spindle 20 and are therefore arranged at a mutual angle of 120° (Figures 1, 3, 4, 5 and 6 illustrate schematically only two legs, which for graphical reasons are shown at a mutual angle of 180°; the third leg is not visible).

The Stewart module 19 also has, according to a per se known structure, means 23 for varying the configuration of the three legs 22 which are adapted to allow a translational motion and a relative inclination of the platform 21 with respect to the framework 18.

For example, the variation means 23 consist, for each leg 22, of a ballscrew-type translational actuator combined with a telescopic structure of said leg, and of joints 22a for rotation in space (shown schematically by a ring in the figures), which rigidly couple the ends of said leg respectively to the framework 18 and to the platform 21.

The means 23 for varying the configuration of the three legs 22 can also be constituted by other embodiments; for example, the three legs can be constituted by other translational actuators.

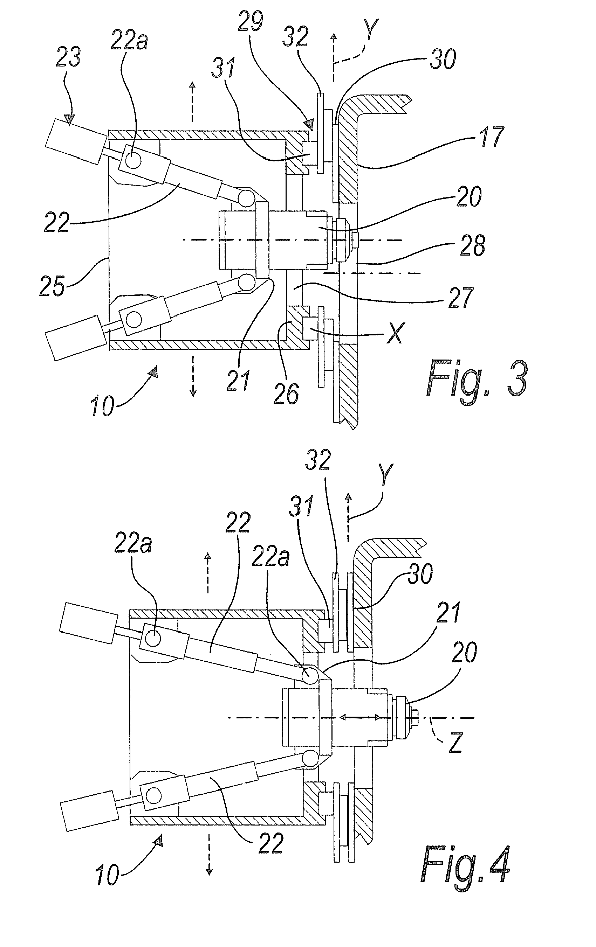

As can be seen in Figure 4, an identical variation of the length of all three legs (starting from an equal length thereof) leads to a translational motion of the platform 21 (and therefore of the spindle 20) along a direction of approach to the workpiece to be machined, which in practice coincides with a working direction of the tool associated with the spindle which is referenced as main direction and is designated by the letter z (in this embodiment, a direction which intersects a radial direction of the table 11).

An unequal variation of the length of the three legs (Figure 4) leads to a rotary and translational motion of the platform 20, which allows to arrange the spindle, and therefore the corresponding tool, in an inclined configuration with respect to the main direction z, thus allowing to perform oblique machining processes with respect to said main direction.

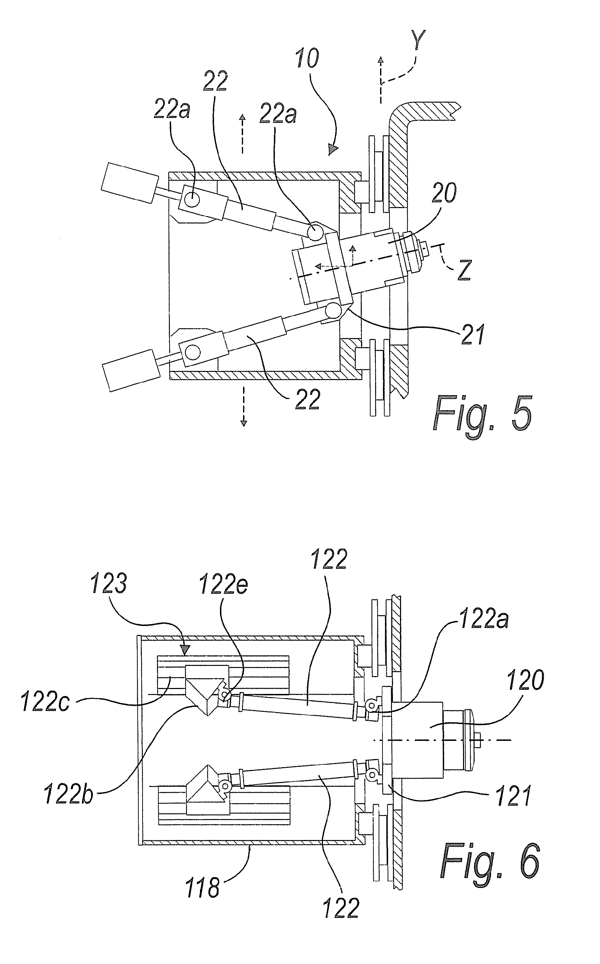

Figure 6 illustrates a second embodiment of the type of legs 22; in this case, each leg 122 has a fixed length and is rigidly coupled by its ends, by way of the joints 122a for rotation in space, respectively to the platform 121, and to a translational device integrated in the framework 118, constituted by a slider 122b (associated with a translational actuator, not shown in the figures, such as for example an electric linear motor), which can slide on a guide 122c which is parallel to the main direction z of approach of the spindle 120 to the workpiece to be machined; the means 123 for varying the configuration of the three legs 122 are therefore constituted by the fixed-length leg, by the joints and by the translational device.

In the embodiments now described, the legs 22-122 constitute a push rod for the platform 21-121, since in practice they "push" in the spindle advancement direction.

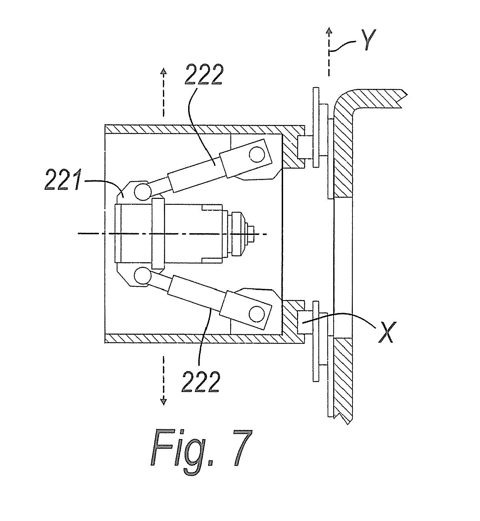

Likewise, as shown in Figure 7, the legs, now designated by the reference numeral 222, constitute a "pull rod" for the platform 221.

The framework 18 has a predominantly three-dimensional structure, which forms internally a space in which the Stewart module 19 is accommodated.

In practice, the legs 22 are rigidly coupled substantially at the bottom 25 of the framework 18, while the platform 21 and the spindle 20 protrude from the front part 26 of the framework 18 through an opening 27 which is arranged so as to correspond to a passage 28 for accessing the region 14 where the workpiece to be machined is placed, said passage being formed in the base frame 17; the framework 18 is rigidly coupled to the base frame in manners described hereinafter.

In order to increase the working volume associated with the spindle 20, the spindle assembly 10 comprises means 29 for translational motion along two mutually perpendicular directions, designated by the reference letters x and y, of the framework 18 with respect to the base frame 17 of the machine M; these two directions are perpendicular to the main direction z of translational motion of the platform 21 produced by the uniform movement of the legs 22.

The translational means 29 (Figures 3 and 4) comprise for example first guides 30, which are oriented along the direction y and are fixed to the base frame 17 proximate to the passage 28, and second guides 31, which are oriented along the direction x (in the figures, the second guides 31 lie in the direction that leads away from the page and therefore at right angles to the first guides 30) and are fixed on carriages 32, which are arranged so that they can slide on the first guides 30 (the carriages 32 and the second guides form a single rigid structure); the framework is arranged so that it can slide on the second guides 31.

The translational means 29 comprise translational actuators (per se of a known type, such as for example brushless motors and ballscrews, motorized rack-and-pinion systems, et cetera, not shown in the figures) for the movement of carriages 32 on the first guides 30 (which produce the movement of the entire framework along the direction y) and for the movement of the framework 18 on the second guides 31 (direction x).

For example, the motor drive related to the movement of the carriages 32 on the first guides 30 is for example a brushless motor which actuates a ballscrew actuator arranged on the frame of the machining station, while the motor drive related to the movement of the framework 18 on the second guides 31 is for example an additional brushless motor which actuates a ballscrew actuator arranged on the structure formed by the carriages 32.

It is evident that the means 29 for the translational motion along two mutually perpendicular directions, designated by x and y, of the framework 18 with respect to the base frame 17 of the machine M can be the most disparate according to design requirements in terms of space, speed, reliability and precision that the background art provides; the basic inventive concepts remains fundamental and resides in that it is possible to move in any manner, along predefined perpendicular directions, a Stewart platform module which supports a spindle (more generically, a movement module with parallel kinematics for a spindle) so as to increase the typical working volume of a Stewart platform module.

In practice it has been found that the invention thus described solves the drawbacks noted in known types of machine tool for chip-forming machining, such as transfer machining systems or machining centers.

In particular, the present invention provides a spindle assembly for chip-forming machine tools which allows to perform machining processes with complex orientations within a large working volume and at the same time does not have particular problems of vibrations as the cutting speed of the tool increases, and also has excellent dynamic performance with respect to currently known machines provided with the same control complexity of their working axes.

This has been achieved in practice by arranging a spindle on a Stewart platform module and by moving said module to increase the working volume of the spindle.

Although the described example refers to a transfer machine, it is evident that this inventive concept can be applied in practice to any type of machine tool, such as for example machining centers, transfer machines of the classic type, transfer machines with medium or high flexibility, for example by combining with the Stewart platform module multispindle machining heads, movable workpiece holders in order to reorient the workpiece being machined in a same machining station, devices for changing automatically the tool from the spindle and corresponding tool holder magazines, devices for moving the workpiece during the machining of the spindle in order to provide machining with complex surfaces, et cetera.

It is further evident that the same inventive concept applies to spindle assemblies with more than three legs for moving the spindle supporting platform, for example six legs, according to a structure which is known as "hexapod".

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2006A000424 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A spindle assembly for chip-forming machine tools, such as transfer machining systems or machining centers, comprising:
- a framework (18, 118) to be associated with a machining station of a machine tool,
- a supporting platform (21, 121, 221) for at least one spindle (20, 120),
- at least three legs (22, 122, 222) for connecting said platform to said framework,
- means (23, 123) for varying the configuration of said at least three legs (22, 122, 222), which are adapted to allow a translational motion and a relative inclination of said platform (21, 121, 221) with respect to said framework (18, 118),
**characterized in that** it comprises means (29) for translational motion along two mutually perpendicular directions (x, y) of said framework (18, 118) with respect to the reference position, which can be identified on the machining station of the machine tool with which the spindle assembly is to be associated.

2. The spindle assembly according to claim 1, **characterized in that** said framework (18, 118) has a predominantly three-dimensional structure, which forms internally a space in which it is possible to accommodate said at least three legs (22, 122, 222) and said platform (21, 121, 221), said at least three legs (22, 122, 222) being rigidly coupled to said framework (18, 118) so as to constitute a push rod or pulling rod for said platform (21, 121, 221), said platform (21, 121, 221) with said spindle (20, 120) being adapted to protrude from the front part (26) of said framework (18, 118) through an opening (27) toward the region (14) for positioning the workpiece to be machined, said framework being rigidly associable with the machining station of the machine tool with which the spindle assembly is to be associated by way of said means (29) for translational motion.

3. The spindle assembly according to claim 2, **characterized in that** said means (29) for translational motion along two directions (x, y) comprise at least one first guide (30), which is oriented in a first direction (y) and can be fixed to the machining station of the machine tool with which the spindle assembly is to be associated, and at least one second guide (31), which is oriented in a second direction (x) which is perpendicular to said first direction (y) and is fixed on at least one carriage (32) which is arranged so that it can slide on said at least one first guide (30), said framework (18) being arranged so that it can slide on said at least one second guide (31).

4. The spindle assembly according to claim 3, **characterized in that** the motor drive related to the movement of said at least one carriage (32) on said first guide (30) is a brushless motor which actuates a ballscrew actuator to be arranged on the machining station of the machine tool with which the spindle assembly is to be associated, while the motor drive related to the movement of said framework (18) on said at least one second guide (31) is an additional brushless motor which actuates a ballscrew actuator which is arranged on the structure formed by said at least one carriage (32).

5. The spindle assembly according to one of the preceding claims,
**characterized in that** said means (23) for varying the configuration of said at least three legs (22), adapted to allow a translational motion and a relative tilting of said platform (21) with respect to said framework (18), consist, for each leg (22), of a ballscrew translational actuator combined with a telescopic structure of said leg, and of the joints (22a) for rotation in space which rigidly couple the ends of said leg respectively to said framework (18) and to said platform (21).

6. The spindle assembly according to one of claims 1 to 5,
**characterized in that** said means (123) for varying the configuration of said at least three legs (122), adapted to allow a translational motion and a relative tilting of said platform (121) with respect to said framework (118), consist, for each leg (122), of a slider (122b), which is associated with a translational actuator and can slide on a guide (122c) which is parallel to a direction (z) which is perpendicular to said two directions (x, y) for translational motion of said framework (18, 118), and of joints (22a) for rotation in space which rigidly couple the ends of the leg respectively to said slider (122b) and to said platform (121), said legs having a fixed length.

7. The spindle assembly according to one of the preceding claims, **characterized in that** said means (23, 123) for varying the configuration of said at least three legs (22, 122) provide at least one direction of translational motion (z) of the platform (21) which is perpendicular to said two directions (x, y) of translational motion of said framework (18).

8. The spindle assembly according to claim 7, **characterized in that** said at least three legs are symmetrical with respect to an axis which coincides with said direction of translational motion (z) of said platform (21).
